Europäisches Patentamt

(19) European Patent Office

Office européen des brevets

(11) EP 0 959 596 A1

(12) EUROPEAN PATENT APPLICATION

(43) Date of publication:
24.11.1999 Bulletin 1999/47

(51) Int. Cl.$^6$: H04L 25/03, H04L 27/26

(21) Application number: 99108629.9

(22) Date of filing: 11.05.1999

(84) Designated Contracting States:
AT BE CH CY DE DK ES FI FR GB GR IE IT LI LU MC NL PT SE
Designated Extension States:
AL LT LV MK RO SI

(30) Priority: 15.05.1998 JP 15076198

(71) Applicant: NEC CORPORATION
Tokyo (JP)

(72) Inventors:
• Kanda, Yoshinori
  Minato-ku, Tokyo (JP)
• Seki, Katsutoshi
  Minato-ku, Tokyo (JP)

(74) Representative:
Baronetzky, Klaus, Dipl.-Ing. et al
Patentanwälte
Dipl.-Ing. R. Splanemann, Dr. B. Reitzner, Dipl.-Ing. K. Baronetzky
Tal 13
80331 München (DE)

(54) Method and circuit for training an adaptive equalizer

(57) A method and a circuit for training the tap coefficient of an adaptive equalizer, which are characterized in that both the target impulse response window and the filter coefficient window are made fixed after a predetermined condition is satisfied. Thereby, the convergence of training can be avoided from being late due to the affect such as noise etc. The predetermined condition includes: (1)when the ratio of power outside the window of target impulse response and power inside the window of target impulse response is less than a predetermined value, (2)when the ratio of power outside the window of filter coefficient and power inside the window of filter coefficient is less than a predetermined value, and (3) when the loop of the impulse response update step, the impulse response window step, the filter coefficient update step and the filter coefficient window step is repeated a predetermined number of times.

FIG.2

EP 0 959 596 A1

## Description

FIELD OF THE INVENTION

This invention relates to a method and a circuit for training the tap coefficient of an adaptive equalizer, and more particularly to a method and a circuit for training the parameter of a time-domain equalizer used to correct a distortion in receive signal caused by the transmission characteristic of channel mainly in a multicarrier modulation transmission system.

BACKGROUND OF THE INVENTION

A conventional method for training the parameter of time-domain equalizer used in a multicarrier modulation transmission system and its problem will be explained below.

At first, the multicarrier modulation transmission system is explained briefly below, while it is described in detail in J.A.C. Bingham, "Multicarrier Modulation For Data Transmission", IEEE Commun. Mag., pp.5-14, May, 1990.

A multicarrier modulation signal can be produced most simply by using an inverse fast Fourier transform (hereinafter referred to as 'IFFT'). Input digital data are grouped into parallel-data blocks called symbols for every predetermined bit number. One symbol parallel data is divided into several bit groups. Then, each of carrier signals of same number with different frequencies is modulated with each of the bit groups.

For example, if one symbol is of a 512-bit binary signal, each two bit from the top in this one symbol is assigned to each of 0 to 255th of 256 carrier frequencies. For the 2-bit logics {0,0}, {0,1}, {1,0} and {1,1}, the amplitude and phase of the corresponding carrier signals are made 1+j, 1-j, -1+j and -1-j. Here, j represents an imaginary number, and for example, 1+j represents a carrier signal with an amplitude of √2 and an phase of +45°. It should be noted that for any of 2-bit logics {0,0}, {0,1}, {1,0} and {1,1}, the amplitude of carrier signal is √2 and the carrier signal is not amplitude-modulated by a signal to be transmitted.

When a multicarrier signal phase-modulated with an original signal to be transmitted is represented by a frequency-domain vector, to convert one symbol of original signal to be transmitted into a multicarrier signal is a simple conversion of digital code, but when this signal is transmitted, IFFT is required because it is transmitted as a time-domain analogue signal. Also, since the frequency-domain signal is of complex number, IFFT needs to be a complex IFFT. On the contrary, in performing a fast Fourier transform(hereinafter referred to as 'FFT'), a complex FFT is required.

Since FFT and IFFT are performed in the technical field of this invention, in the following explanation, a general frequency-domain signal vector is represented by a capital letter, and a time-domain signal obtained by IFFT-treating a frequency-domain signal vector is represented by a lower-case letter as a function of the discrete delay time D.

A received signal from the channel can be demodulated by FFT. When the received and demodulated signal is amplitude-modulated, the amplitude modulation is a distortion caused by the channel characteristic since the transmit signal of multicarrier modulation transmission system is not amplitude-modulated, as described earlier. This distortion is first corrected by a frequency-domain equalizer (hereinafter referred to as 'FEQ').

When the time length of impulse response of channel is negligible comparing with that of symbol, only FEQ is an equalizer required.

However, in the multicarrier modulation transmission system, in general, the time length of the impulse response of channel is not negligible comparing with that of symbol. In this case, a distortion occurs, causing an inter-symbol interference and an inter-channel interference. The inter-symbol interference means an affect to a carrier from the adjacent carrier. One method for avoiding the inter-symbol interference and inter-channel interference is to shorten the impulse response by inputting a received signal to a time-domain equalizer before the demodulation.

The time-domain equalizer intended to shorten the impulse response can be realized by a FIR (finite impulse filter) filter. Namely, the respective tap coefficients of FIR filter are adapted to equalize correctly the transmission characteristic of channel. The adaptation process is called training of tap coefficient. The training methods for tap coefficient are, for example, disclosed in U.S. patent No.5285474 and Japanese patent application No.09-364382(1997) which is commonly invented by the present inventor(s).

FIG.1 is a block diagram showing the method disclosed in U.S. patent No.5285474. When the discrete time impulse response of channel is h(D), the tap number of FIR equalizer is L, the tap coefficient is w(D), the target impulse response is b(D) and the tap length that b(D) is not zero is v tap (i.e., when it is targeted that the length of impulse response of channel equalized by the FIR equalizer is less than v tap), the final goal of this training algorithm is to approximate the equalized channel response h(D)*w(D) (* means cyclic convolving) to b(D).

A pseudo-random binary sequence (hereinafter referred to as 'PRBS') generated by a known PRBS generator 110 is input to an encoder 120, encoded into a frequency-domain training vector X, input to IFFT 130. IEFT 130 converts X into a time-domain training vector x(D), outputting it to a channel 200. x(D) is transmitted repeatedly until finishing the training.

The time-domain receive vector y(D) of a receiver 1000 is given by:

$$y(D)=x(D)*h(D)+n(D) \qquad (1)$$

where n(D) is a receive noise vector.

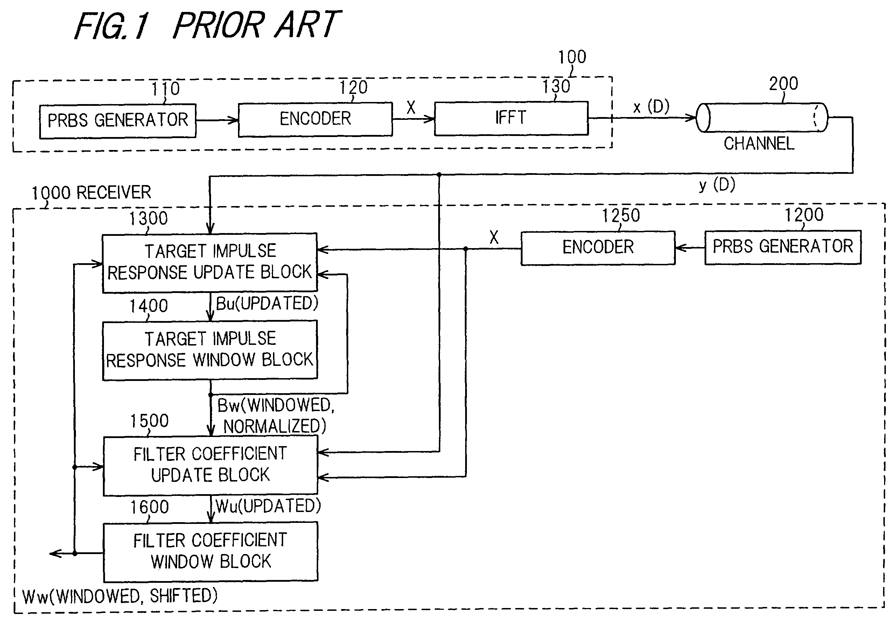

The training circuit in FIG.1 has inputs of the time-domain receive vector y(D) and a frequency-domain training vector X generated on the receiver side, and trains adaptively b(D) and w(D). Giving reasonable initial values to b(D) and w(D), it repeats the following steps until reaching a predetermined convergence condition. Here, subscript 'u' refers to an updated quantity and the subscript 'w' refers to a windowed quantity. Also, X, Y, W and B are generated by FFT of x(D), y(D), w(D) and b(D), respectively.

1. An impulse response update step that a target impulse response update block 1300 responds to the inputting of X, Y and $W_w$ to update B in the frequency domain to produce $B_u$.
2. An impulse response window multiplication step that a target impulse response window block 1400 windows $B_u$ by converting it to the time domain, converting the result back to the frequency domain to produce $B_w$.
3. A filter coefficient update step that a filter coefficient update block 1500 responds to the inputting of X, Y and $W_w$ to update W in the frequency domain to produce $W_u$.
4. A filter coefficient window multiplication step that a filter coefficient window block 1600 windows $W_u$ by converting it to the time domain, converting the result back to the frequency domain to produce $W_w$.

The detailed methods for performing the above steps are as follows:

1. The Impulse Response Update Step

As the method for updating a target impulse response B, there are two methods, i.e., a frequency-domain LMS (least mean square) method and a frequency-domain division method.

In the frequency-domain LMS method, the target impulse response update block 1300 FFT-treats the received signal y(D) and the filter coefficient $W_w(D)$ produced by the filter coefficient window block 1600, producing the frequency-domain signals Y, $W_w$. The frequency-domain training vector X is input from the encoder 1250, and the windowed target impulse response $B_w$ is input from the target impulse response window block 1400.

An error signal E is defined by equation (2) and generated to the inputting of Y, $W_w$, X and $B_w$.

$$E = B_w X - W_w Y \qquad (2)$$

The target impulse response B is updated using the frequency-domain LMS method as:

$$B_u = B_w + 2u_b EX^* \qquad (3)$$

where $u_b$ is the stepsize and $X^*$ is the complex conjugate of X.

In the frequency-domain division method, the target impulse response update block 1300 FFT-treats the received signal y(D) and the filter coefficient $w_w(D)$ produced by the filter coefficient window block 1600, producing the frequency-domain signals Y, $W_w$. The frequency-domain training vector X is input from the encoder 1250. With the inputting of X, Y and $W_w$, the target impulse response B is updated as:

$$B_u = (W_w Y)/X \qquad (4)$$

2. The Impulse Response Window Multiplication Step

The target impulse response window block 1400 IFFT-treats the updated target impulse response $B_u$ output from the target impulse response update block 1300, producing the time-domain signal $b_u(D)$. The target impulse response window block 1400 selects consecutive v taps, which give the maximum power, of $b_u(D)$, zeroing the remaining taps. b(D), w(D) are normalized to a predetermined value to prevent the convergence into b(D)=w(D)=0 by windowing, output as a windowed target impulse response $b_w(D)$. $b_w(D)$ is then FFT-treated to produce the frequency-domain signal $B_w$.

3. The Filter Coefficient Update Step

As the method for updating the filter coefficient W, there are two methods, i.e., the frequency-domain LMS method and the frequency-domain division method.

In the frequency-domain LMS method, the filter coefficient update block 1500 FFT-treats the received signal y(D) and the filter coefficient $w_w(D)$ produced by the filter coefficient window block 1600, producing the frequency-domain signals Y, $W_w$. The frequency-domain training vector X is input from the encoder 1250, and the windowed target impulse response $B_w$ is input from the target impulse response window block 1400.

An error signal E is defined by equation (2) and generated to the inputting of Y, $W_w$, X and $B_w$.

The filter coefficient W is updated using the frequency-domain LMS method as:

$$W_u = W_w + 2u_b EY^* \qquad (5)$$

where $u_b$ is the stepsize and $Y^*$ is the complex conjugate of Y.

In the frequency-domain division method, the filter coefficient update block 1500 FFT-treats the received signal y(D) and the filter coefficient $w_w(D)$ produced by the filter coefficient window block 1600, producing the frequency-domain signals Y, $W_w$. The frequency-domain training vector X is input from the encoder 1250. With the inputting of X, Y and $W_w$, the filter coefficient W is updated as:

$$W_u=(B_w X)/Y \qquad (6)$$

4. The Filter Coefficient Window Multiplication Step

The filter coefficient window block 1600 IFFT-treats the updated target impulse response $W_u$ output from the filter coefficient update block 1500, producing the time-domain signal $w_u(D)$. The filter coefficient window block 1600 selects consecutive L taps, which give the maximum power, of $w_u(D)$. The shifting of tap coefficient is performed so that the selected L taps are shifted to the temporal beginning of the filter coefficient. The filter coefficient window block 1600 zeros the remaining taps not selected, outputting the windowed filter coefficient $w_w(D)$.

The conventional method for training the tap coefficient adaptive of adaptive equalizer is performed as described above. Thus, there are provided the two methods for each of the target impulse response update step and the filter coefficient update step. Thereby, four combinations shown below can exist. Of these, cases 1 and 4 that the convergence is unstable are not used. Case 2 is desirable to use if v<<L, and case 3 is desirable use if v>>L.

case 1: To both W and B, the frequency-domain division is performed.
case 2: To W, the frequency-domain division is performed and to B, the frequency-domain LMS is performed.
case 3: To B, the frequency-domain division is performed and to W, the frequency-domain LMS is performed.
case 4: To both W and B, the frequency-domain LMS is performed.

However, the conventional training method has a problem described below. Namely, after the convergence error reduces to some extent, the convergence error is likely to increase just after the window position is varied by an affect such as noise etc. This is assumed caused by a wrong correction of window to the affect such as noise etc. When such a wrong correction is performed, the convergence in training of FIR filter takes a long time, which causes an increase in convergence error.

SUMMARY OF THE INVENTION

Accordingly, it is an object of the invention to provide a method and a circuit for training the tap coefficient of an adaptive equalizer that can make the parameter of time-domain equalizer adaptive during a time as short as possible.

In this invention, both the target impulse response window and the filter coefficient window are made fixed after a predetermined condition is satisfied. Thereby, the convergence of training can be avoided from being late due to the affect such as noise etc.

For example, the predetermined condition includes:

1. when the ratio of power outside the window of target impulse response and power inside the window of target impulse response is less than a predetermined value,
2. when the ratio of power outside the window of filter coefficient and power inside the window of filter coefficient is less than a predetermined value, and
3. when the loop of the impulse response update step, the impulse response window step, the filter coefficient update step and the filter coefficient window step is repeated a predetermined number of times.

According to the invention, a method for training the tap coefficient of an adaptive equalizer, comprises the steps of:

(a) on the transmission side, generating a frequency-domain training vector X by encoding a code to be generated from a PRBS (pseudo-random binary sequence) generator and converting the frequency-domain training vector X into a time-domain signal then transmitting it to a channel;
(b) on the reception side where a signal transmitted from the transmission side is received, generating a frequency-domain training vector X analogous to that generated on the transmission side;
(c) providing a target impulse response update block, a target impulse response window block, a filter coefficient update block and a filter coefficient window block so as to train a FIR (finite impulse response) filter used as a time equalizer on the reception side, and at the target impulse response update block, determining an updated value $B_u$ of signal B so as to reduce an error signal $E=B_w X-W_w Y$ for a signal (represented as Y in the frequency-domain) received from the channel, the training vector X, an output (represented as $B_w$ in the frequency-domain) of the target impulse response window block and an output (represented as $W_w$, in the frequency-domain) of the filter coefficient window block where the initial values of $B_w$ and $W_w$ are predetermined properly;
(d) at the target impulse response window block, converting the updated value $B_u$ into a time-domain signal $b_u(D)$, selecting consecutive v taps, which give the maximum power, of $b_u(D)$, and zeroing the remaining taps;
(e) at the filter coefficient update block, determining an updated value $W_u$ of signal W so as to reduce the error signal for the signal Y, signal X, signal $B_w$ and signal $W_w$;
(f) at the filter coefficient window block, selecting consecutive L taps, which give the maximum power, of a time-domain signal $w_w(D)$ for the output $W_u$ of the filter coefficient update block, zeroing the remaining taps not selected, and shifting the tap coefficient so that the selected L taps locate at the temporal beginning of the filter coefficient;

(g) repeating a loop composed of the steps (c), (d), (e) and (f) until the error signal is converged sufficiently; and

(h) stopping changing the value $B_w$ and the value $W_w$ when in the process of the step (g), it is determined that the value $B_w$ or the value $W_w$ is sufficiently converged.

According to another aspect of the invention, a circuit for training the tap coefficient of an adaptive equalizer, comprises:

a PRBS (pseudo-random binary sequence) generator for generating a PRBS code provided on the transmission side;

an encoder for encoding the output code of the PRBS generator to generate a frequency-domain training vector X on the transmission side;

IFFT for converting the frequency-domain training vector X into a time-domain signal and then transmitting it to a channel;

a PRBS generator and an encoder, which are analogous to the PRBS and the encoder on the transmission side, for generating a training vector X similar to the frequency-domain training vector generated on the transmission side, provided on the reception side;

an impulse response updating means that is composed of a target impulse response update block, a target impulse response window block, a filter coefficient update block and a filter coefficient window block so as to train a FIR (finite impulse response) filter used as a time equalizer on the reception side, and that at the target impulse response update block, determines an updated value $B_u$ of signal B so as to reduce an error signal $E = B_w X - W_w Y$ for a signal (represented as Y in the frequency-domain) received from the channel, the training vector X, an output (represented as $B_w$ in the frequency-domain) of the target impulse response window block and an output (represented as $W_w$ in the frequency-domain) of the filter coefficient window block where the initial values of $B_w$ and $W_w$ are predetermined properly;

an impulse response window multiplying means that at the target impulse response window block, converts the updated value $B_u$ into a time-domain signal $b_u(D)$, selecting consecutive v taps, which give the maximum power, of $b_u(D)$, and zeroing the remaining taps;

a filter coefficient updating means that at the filter coefficient update block, determines an updated value $W_u$ of signal W so as to reduce the error signal for the signal Y, signal X, signal $B_w$ and signal $W_w$;

a filter coefficient window multiplying means that at the filter coefficient window block, selects consecutive L taps, which give the maximum power, of a time-domain signal $W_w(D)$ for the output $W_u$ of the filter coefficient update block, zeroing the remaining taps not selected, and shifting the tap coefficient so that the selected L taps locate at the temporal beginning of the filter coefficient;

a training means that repeats the circular operation of the impulse response updating means, the impulse response window multiplying means, the filter coefficient updating means and the filter coefficient window multiplying means until the error signal is converged sufficiently; and

a window fixing means that stops changing the value $B_w$ and the value $W_w$ when in the process of the operation of the training means, it is determined that the value $B_w$ or the value $W_w$ is sufficiently converged.

BRIEF DESCRIPTION OF THE DRAWINGS

The invention will be explained in more detail in conjunction with the appended drawings, wherein:

FIG. 1 is a block diagram showing the conventional circuit for training the tap coefficient of adaptive equalizer,

FIG. 2 is a block diagram showing a circuit for training the tap coefficient of adaptive equalizer in a preferred embodiment according to the invention,

FIG. 3 is a block diagram showing an example of the composition of a target impulse response update block in FIG. 2,

FIG. 4 is a block diagram showing an example of the composition of a target impulse response window block in FIG. 2,

FIG. 5 is a block diagram showing another example of the composition of a target impulse response window block in FIG. 2,

FIG. 6 is a block diagram showing an example of the composition of a filter coefficient update block in FIG. 2,

FIG. 7 is a block diagram showing an example of the composition of a filter coefficient window block in FIG. 2,

FIG. 8 is a block diagram showing another example of the composition of a filter coefficient window block in FIG. 2,

FIG. 9 is a waveform diagram showing an example of waveform in the impulse response window block in FIG. 4,

FIG. 10 is a waveform diagram showing an example of waveform in the filter coefficient window block in FIG. 7,

FIG. 11 is a block diagram showing a circuit for training the tap coefficient of adaptive equalizer in another preferred embodiment according to the invention,

FIG.12 is a block diagram showing an example of the composition of a target impulse response window block in FIG.11,

FIG.13 is a block diagram showing an example of the composition of a filter coefficient update block in FIG.11, and

FIG.14 is a block diagram showing an example of the composition of a filter coefficient window block in FIG.11.

## DESCRIPTION OF THE PREFERRED EMBODIMENTS

The preferred embodiments of the invention will be explained below, referring to the drawings.

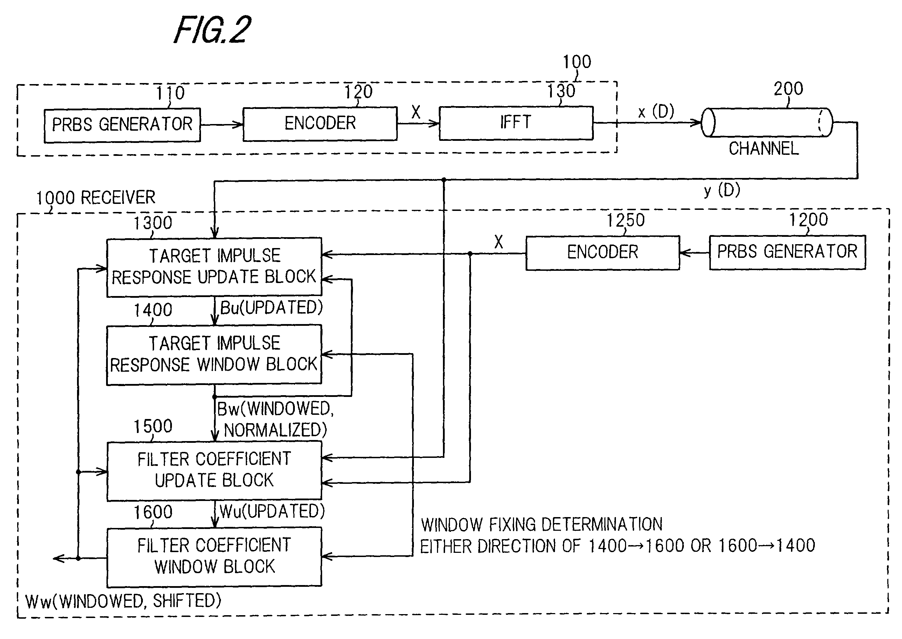

FIG.2 is a block diagram showing a circuit for training the tap coefficient of adaptive equalizer in the preferred embodiment according to the invention. In FIG.2, same or analogous parts are indicated by same reference numerals as used in FIG.1, and their operations are as generally described about the circuits in FIG.1 and the explanations thereof are omitted herein.

In FIG.2, circuits newly added to those in FIG.1 are a control line extending from the target impulse response window block 1400 to the filter coefficient window block 1600, and a control line extending from the filter coefficient window block 1600 to the target impulse response window block 1400. In explaining the control operations of these control lines, the operations of the related parts are explained in detail. Before the explanations, the terms used about the conventional circuit are defined for confirmation. Namely, target impulse response b(D) is given as a generic term of:

1. updated impulse response $B_u$ produced by the target impulse response update block 1300; and
2. windowed impulse response $B_w$ produced by the target impulse response window block 1400.

Similarly, the filter coefficient w(D) of FIR filter is given as a generic term of:

1. updated filter coefficient $W_u$ produced by the filter coefficient update block 1500; and
2. windowed filter coefficient $W_w$ ($w_w(D)$ in the time-domain representation) produced by the filter coefficient window block 1600.

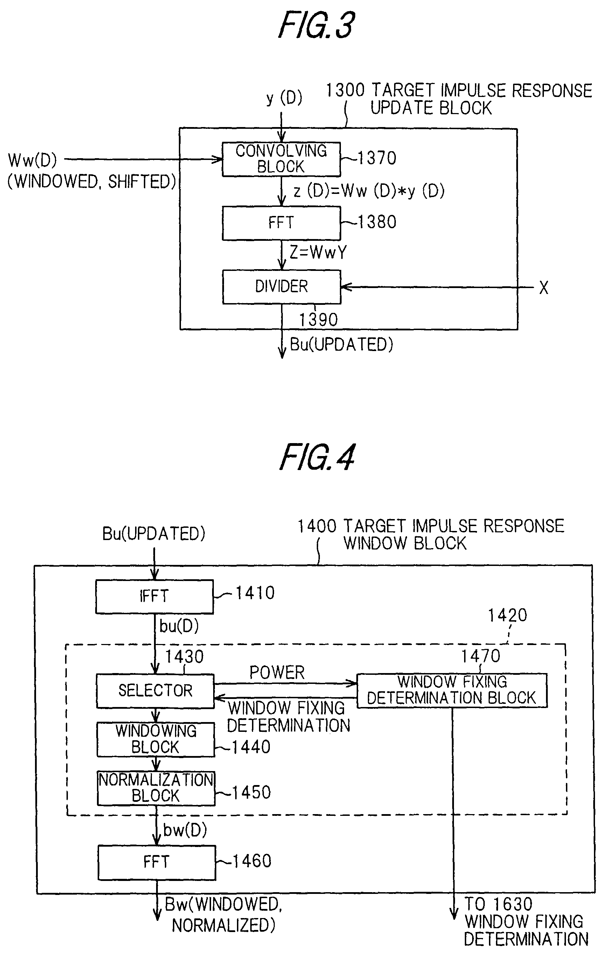

FIG.3 is a block diagram showing the internal composition of the target impulse response update block 1300 in FIG.2. A convolving block 1370 responds to the inputting of the filter coefficient $w_w(D)$ and receive signal y(D) to produce an equalized receive signal z(D).

A FFT block 1380 responds to the inputting of the equalized receive signal z(D) to produce a frequency-domain signal Z. A divider 1390 divides the signal Z by a frequency-domain training vector X (to be input from the encoder 1250), producing the updated target impulse response $B_u$ (=Z/X).

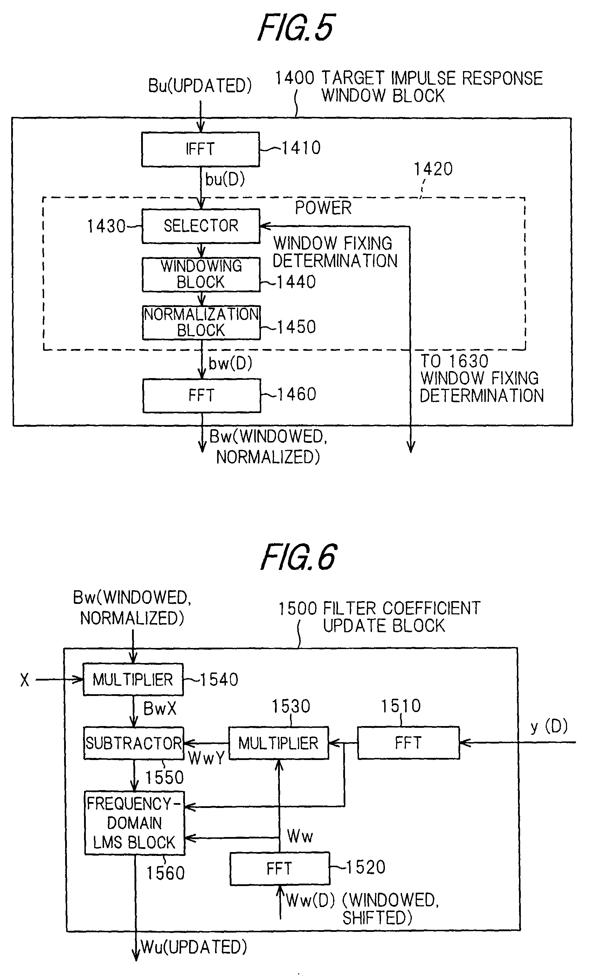

FIGS.4 and 5 are block diagrams showing examples of the internal composition of the target impulse response window block 1400 in FIG.2.

For the example in FIG.4, the updated target impulse response $B_u$ input from the target impulse response update block 1300 is converted into a time-domain signal $b_u(D)$ by IFFT 1410. A window block 1420 is composed of a selector 1430, a windowing block 1440, a normalization block 1450 and a window fixing determination block 1470. The selector 1430 selects a predetermined number of consecutive taps, which give the maximum power, of the time-domain signal $b_u(D)$. The windowing block 1440 zeros the tap coefficient not selected.

However, the selector 1440 fixes a window position for any loops after a loop that a predetermined condition is satisfied. The fixing time point is judged by the window fixing determination block 1470. Namely, after the ratio of power outside the window of target impulse response to power inside the window of target impulse response is less than a predetermined value, it is determined that the window should be fixed. Then, according to this determination, the selector is controlled and, as described later, a selector 1630 of the filter coefficient window block 1600 is controlled.

The normalization block 1450 normalizes b(D) to a predetermined value, outputting a windowed target impulse response $b_w(D)$. This is intended to prevent the convergence into b(D)=w(D)=0 by windowing b(D), w(D).

FFT 1460 responds to the inputting of $b_w(D)$ to produce the frequency-domain signal $B_w$.

For the example in FIG.5, the selector 1430 is controlled by a window fixing determination signal that is, as described later, sent from a window fixing determination block 1660 of the filter coefficient window block 1600.

FIG.6 is a block diagram showing the internal composition of the filter coefficient update block 1500 in FIG.2.

FFT 1510 responds to the inputting of receive signal y(D) to produce the frequency-domain signal Y. FFT 1520 responds to the inputting of the filter coefficient $w_w(D)$ output from the filter coefficient window block 1600 to produce Ww. A multiplier 1530 multiplies Y and $W_w$ to produce $W_wY$. A multiplier 1540 multiplies X and $B_w$ to produce $B_wX$. A subtractor 1550 performs the operation $E=B_wX-W_wY$ to produce the error signal E. A frequency-domain LMS block 1560 responds to the inputting of Y, $W_w$ and E to output updating the equalizer filter coefficient W by using the LMS method.

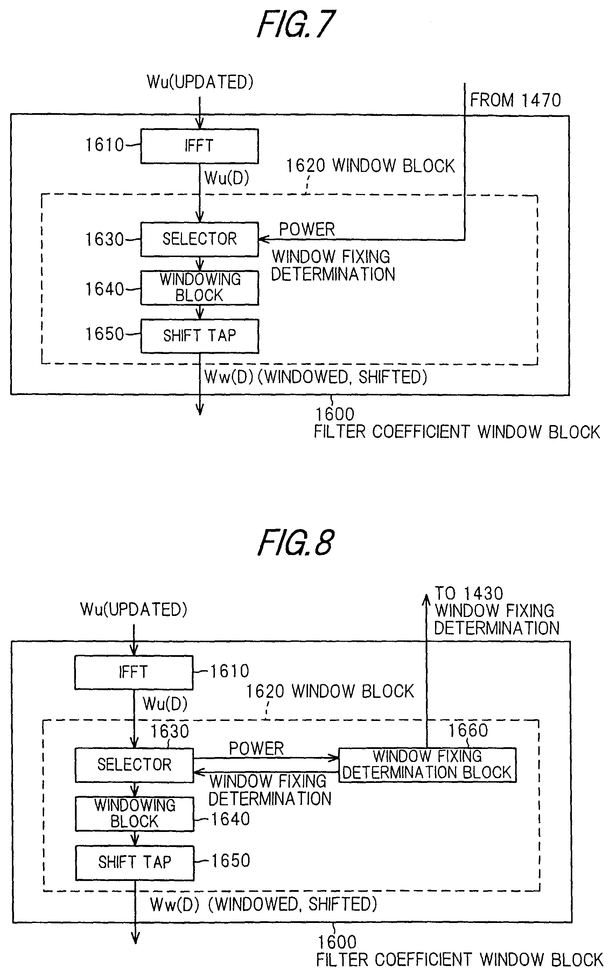

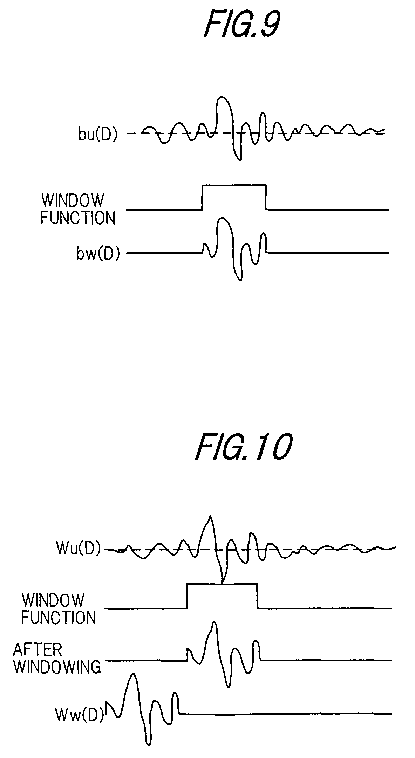

FIGS.7 and 8 are block diagrams showing examples of the internal composition of the filter coefficient window block 1600 in FIG.2. FIG.7 corresponds to the example in FIG.4 and FIG.8 corresponds to the example in FIG.5.

For the example in FIG.7, IFFT 1610 responds to the inputting of the updated filter coefficient $W_u$ output from the filter coefficient update block 1500 to produce the time-domain signal $w_u(D)$. A window block 1620 is composed of the selector 1630, a windowing block 1640, and a shift tap block 1650.

The selector 1630 selects a predetermined number of consecutive taps, which give the maximum power, of $w_u(D)$. The windowing block 1640 zeros the remaining taps not selected. Also, the selector 1640 fixes a window position for any loops after a loop that a predetermined condition is satisfied. The fixing time point is determined by the window fixing determination block 1470 in FIG.4.

The shift tap block 1650, to the time-domain signal $w_u(D)$, shifts the tap coefficient so that selected taps come to the temporal beginning of the filter coefficient, outputting it as the windowed filter coefficient $w_w(D)$.

For the example in FIG.8, the window fixing determination block 1660 is provided and the selector 1630 determines that a window should be fixed when the ratio of power outside the window of the filter coefficient to power inside the window of the filter coefficient is less than a predetermined value. Then, according to this determination, the selector 1630 is controlled and the selector 1430 of the target impulse response window block 1400 is also controlled.

FIG.9 shows a waveform diagram that in the target impulse response window block 1400, the updated target impulse response $b_u(D)$ is multiplied by a window function to obtain the windowed target impulse response $b_w(D)$. FIG.10 shows a waveform diagram that in the filter coefficient window block 1600, the updated filter coefficient $w_u(D)$ is multiplied by a window function to obtain the windowed filter coefficient $w_w(D)$ and then shifted.

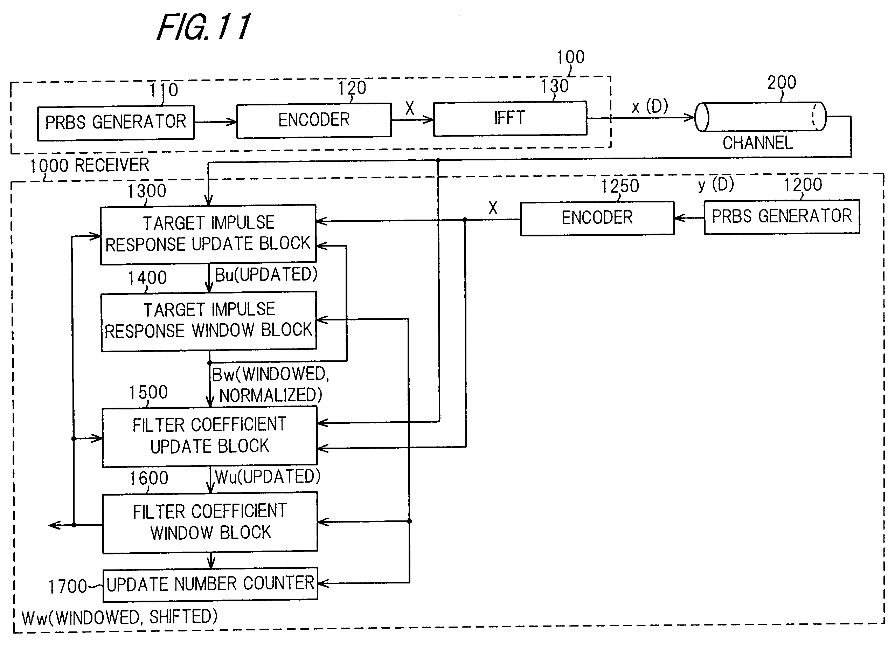

FIG. 11 is a block diagram showing another embodiment according to the invention. In FIG.11, same parts are indicated by same reference numerals as used in FIG.2, and the explanations thereof are omitted since they operate similarly.

The embodiment in FIG.11 is mainly different from that in FIG,2 in that it is provided with an update number counter 1700.

The update number counter 1700 counts the number of loops composed of the impulse response update step of the target impulse response update block 1300, the impulse response window multiplication step of the target impulse response window block 1400, the filter coefficient update step of the filter coefficient update block 1500, and the filter coefficient window multiplication step of the filter coefficient window block 1600.

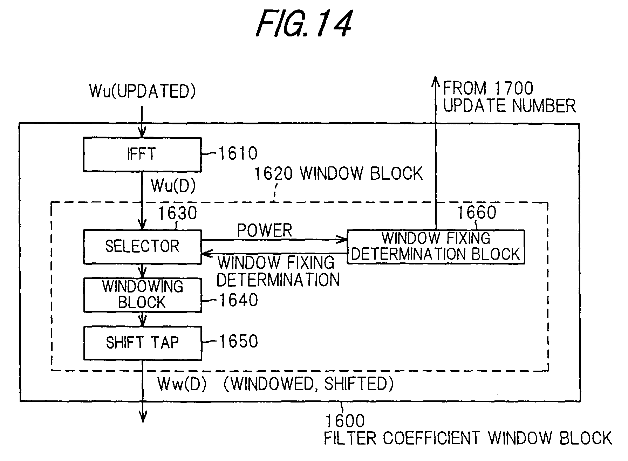

Since the operation in each step is conducted by, for example, the program control of a processor, it is so performed that the address of a program memory where the command to conduct the operation of, for example, the shift tap block 1650 in FIG.14 is stored is memorized and the outputting of the address is awaited. Thus, by resetting the update number counter 1700 at the time point of initialization, and incrementing the count number of the update number counter 1700 every time the same address as the memorized address is output, the count number of the counter can indicate the number of loops performed. So, when the count number of the update number counter 1700 is more than a predetermined value, it can be determined that $B_w$ or $W_w$ is converged sufficiently, and then the window can be fixed.

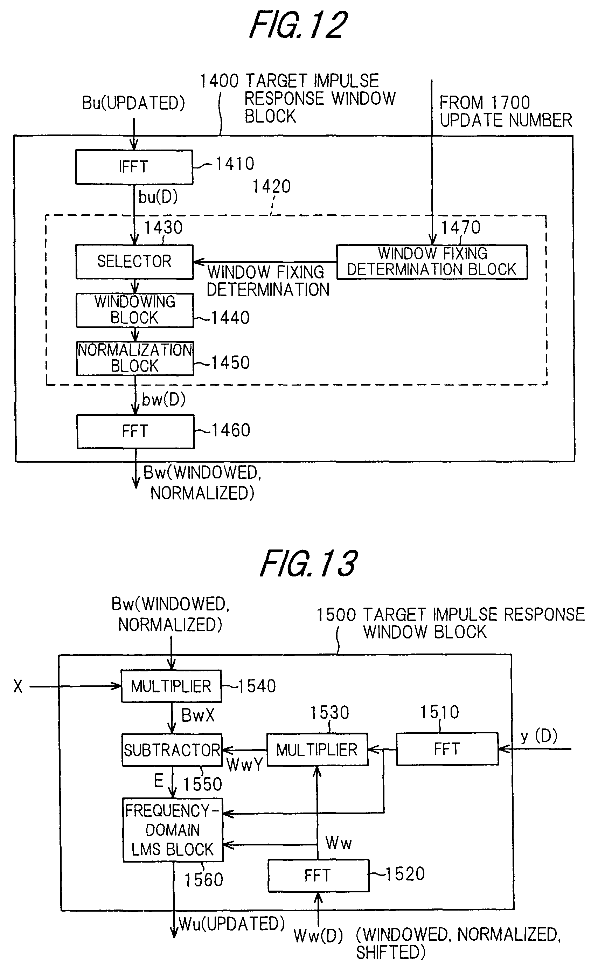

FIG.12 is a block diagram showing the internal composition of the target impulse response window block 1400 in FIG.11. In FIG.12, same parts are indicated by same reference numerals as used in FIG.4. The difference is that the window fixing determination block 1470 in FIG.12 determines whether to fix the window according to the count number of the update number counter 1700.

FIG.13 is a block diagram showing the internal composition of the filter coefficient update block 1500 in FIG.11. Since the composition in FIG.13 is analogous to that in FIG.6, the explanation thereof is omitted herein.

FIG.14 is a block diagram showing the filter coefficient window block 1600 in FIG.11. In FIG.14, same parts are indicated by same reference numerals as used in FIG.8. The difference is that the window fixing determination block 1660 in FIG.14 determines whether to fix the window according to the count number of the update number counter 1700.

Although the above embodiments are so composed that this invention is applied to the preferable example of conventional method for training the tap coefficient of adaptive equalizer, it goes without saying that this invention can be applied to any other conventional methods.

For example, though for the circuit in FIG.2, the target impulse response update block 1300 uses the frequency-domain division as shown in FIG.3 and the filter coefficient update block 1500 uses the frequency-domain LMS as shown in FIG.6, this invention can be applied to any of the four combinations of the frequency-domain division and the frequency-domain LMS in case 1 to case 4 described earlier.

On the other hand, the target impulse response window block 1400 in FIG.2 is provided with the normalization block 1450, as shown in FIG.4 or 5, which normalizes the time-domain signal $b_w(D)$. However, the inventor reports that such direct normalization has a problem in Japanese patent application No.9-364382(1997) commonly invented by the inventor and suggests a solution thereof. Thus, it goes without saying that such a solution can be also applied to this invention and can be incorporated into this invention.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

**Claims**

1. A method for training the tap coefficient of an adaptive equalizer, comprising the steps of:

    (a) on the transmission side, generating a frequency-domain training vector X by encoding a code to be generated from a PRBS (pseudo-random binary sequence) generator and converting said frequency-domain training vector X into a time-domain signal then transmitting it to a channel;
    (b) on the reception side where a signal transmitted from the transmission side is received, generating a frequency-domain training vector X analogous to that generated on the transmission side;
    (c) providing a target impulse response update block, a target impulse response window block, a filter coefficient update block and a filter coefficient window block so as to train a FIR (finite impulse response) filter used as a time equalizer on the reception side, and at said target impulse response update block, determining an updated value $B_U$ of signal B so as to reduce an error signal $E = B_w X - W_w Y$ for a signal (represented as Y in the frequency-domain) received from said channel, said training vector X, an output (represented as $B_w$ in the frequency-domain) of said target impulse response window block and an output (represented as $W_w$ in the frequency-domain) of said filter coefficient window block where the initial values of $B_w$ and $W_w$ are predetermined properly;
    (d) at said target impulse response window block, converting said updated value $B_U$ into a time-domain signal $b_U(D)$, selecting consecutive v taps, which give the maximum power, of $b_U(D)$, and zeroing the remaining taps;
    (e) at said filter coefficient update block, determining an updated value $W_U$ of signal W so as to reduce said error signal for said signal Y, signal X, signal $B_w$ and signal $W_w$;
    (f) at said filter coefficient window block, selecting consecutive L taps, which give the maximum power, of a time-domain signal $w_w(D)$ for the output $W_U$ of said filter coefficient update block, zeroing the remaining taps not selected, and shifting the tap coefficient so that the selected L taps locate at the temporal beginning of the filter coefficient;
    (g) repeating a loop composed of said steps (c), (d), (e) and (f) until said error signal is converged sufficiently; and
    (h) stopping changing the value $B_w$ and the value $W_w$ when in the process of said step (g), it is determined that the value $B_w$ or the value $W_w$ is sufficiently converged.

2. A method for training the tap coefficient of an adaptive equalizer, according to claim 1, wherein:

    it is determined that the value $B_w$ or the value $W_w$ is sufficiently converged when in the process of said step (g), said loop composed of said steps (c), (d), (e) and (f) is repeated a predetermined number of times.

3. A method for training the tap coefficient of an adaptive equalizer, according to claim 1, wherein:

    it is determined that the value $B_w$ is sufficiently converged when in the process of said step (g), the ratio of power outside the window of said target impulse response to power inside the window of said target impulse response is less than a predetermined value.

4. A method for training the tap coefficient of an adaptive equalizer, according to claim 1, wherein:

    it is determined that the value $W_w$ is sufficiently converged when in the process of said step (g), the ratio of power outside the window of said filter coefficient to power inside the window of said filter coefficient is less than a predetermined value.

5. A circuit for training the tap coefficient of an adaptive equalizer, comprising:

    a PRBS (pseudo-random binary sequence) generator for generating a PRBS code provided on the transmission side;
    an encoder for encoding the output code of said PRBS generator to generate a frequency-domain training vector X on the transmission side;
    IFFT for converting said frequency-domain training vector X into a time-domain signal and then transmitting it to a channel;
    a PRBS generator and an encoder, which are analogous to said PRES and said encoder on the transmission side, for generating a training vector X similar to said frequency-domain training vector generated on the transmission side, provided on the reception side;
    an impulse response updating means that is composed of a target impulse response update block, a target impulse response window block, a filter coefficient update block and a filter coefficient window block so as to train a FIR (finite impulse response) filter used as a time equalizer on the reception side, and that at said target impulse response update block, determines an updated value $B_u$ of signal B so as to reduce an error signal $E=B_wX-W_wY$ for a signal (represented as Y in the frequency-domain) received from said channel, said training vector X, an output (represented as $B_w$ in the frequency-domain) of said target impulse response window block and an output (represented as $W_w$ in the frequency-domain) of said filter coefficient window block where the initial values of $B_w$ and $W_w$ are predetermined properly;

an impulse response window multiplying means that at said target impulse response window block, converts said updated value $B_u$ into a time-domain signal $b_u(D)$, selecting consecutive v taps, which give the maximum power, of $b_u(D)$, and zeroing the remaining taps;

a filter coefficient updating means that at said filter coefficient update block, determines an updated value $W_u$ of signal W so as to reduce said error signal for said signal Y, signal X, signal $B_w$ and signal $W_w$;

a filter coefficient window multiplying means that at said filter coefficient window block, selects consecutive L taps, which give the maximum power, of a time-domain signal $w_w(D)$ for the output $W_u$ of said filter coefficient update block, zeroing the remaining taps not selected, and shifting the tap coefficient so that the selected L taps locate at the temporal beginning of the filter coefficient;

a training means that repeats the circular operation of said impulse response updating means, said impulse response window multiplying means, said filter coefficient updating means and said filter coefficient window multiplying means until said error signal is converged sufficiently; and

a window fixing means that stops changing the value $B_w$ and the value $W_w$ when in the process of the operation of said training means, it is determined that the value $B_w$ or the value $W_w$ is sufficiently converged.

6. A circuit for training the tap coefficient of an adaptive equalizer, according to claim 5, wherein:

said window fixing means counts the repeat number of said circular operation of said impulse response updating means, said impulse response window multiplying means, said filter coefficient updating means and said filter coefficient window multiplying means, and determines that the value $B_w$ or the value $W_w$ is sufficiently converged when said repeat number reaches a predetermined value.

7. A circuit for training the tap coefficient of an adaptive equalizer, according to claim 5, wherein:

it is determined that the value $B_w$ is sufficiently converged when in the process of the training operation of said training means, the ratio of power outside the window of said target impulse response to power inside the window of said target impulse response is less than a predetermined value.

8. A circuit for training the tap coefficient of an adaptive equalizer, according to claim 5, wherein:

it is determined that the value $W_w$ is sufficiently converged when in the process of the training operation of said training means, the ratio of power outside the window of said filter coefficient to power inside the window of said filter coefficient is less than a predetermined value.

# FIG.1 PRIOR ART

100

| 110 | 120 | | 130 |
|---|---|---|---|
| PRBS GENERATOR | ENCODER | X | IFFT |

x (D)

200

CHANNEL

1000 RECEIVER

y (D)

1300

TARGET IMPULSE
RESPONSE UPDATE BLOCK

X

1250 ENCODER

1200 PRBS GENERATOR

1400 | Bu(UPDATED)

TARGET IMPULSE
RESPONSE WINDOW BLOCK

Bw(WINDOWED,
NORMALIZED)

1500

FILTER COEFFICIENT
UPDATE BLOCK

1600 | Wu(UPDATED)

FILTER COEFFICIENT
WINDOW BLOCK

Ww(WINDOWED, SHIFTED)

EP 0 959 596 A1

# FIG.2

EP 0 959 596 A1

## FIG.3

1300 TARGET IMPULSE RESPONSE UPDATE BLOCK

y (D)

Ww(D) (WINDOWED, SHIFTED) → CONVOLVING BLOCK ~1370

$z (D) = Ww (D) * y (D)$

FFT ~1380

$Z = WwY$

DIVIDER ← X

1390

Bu(UPDATED)

## FIG.4

1400 TARGET IMPULSE RESPONSE WINDOW BLOCK

Bu(UPDATED)

IFFT ~1410

bu(D)

1420

1430

SELECTOR → POWER → WINDOW FIXING DETERMINATION BLOCK 1470

← WINDOW FIXING DETERMINATION

WINDOWING BLOCK ~1440

NORMALIZATION BLOCK ~1450

bw(D)

FFT ~1460

Bw(WINDOWED, NORMALIZED)

TO 1630 WINDOW FIXING DETERMINATION

# FIG.5

Bu(UPDATED)    1400 TARGET IMPULSE RESPONSE
                    WINDOW BLOCK

IFFT —1410

bu(D)

1420

POWER

1430— SELECTOR

WINDOW FIXING
DETERMINATION

WINDOWING
BLOCK —1440

NORMALIZATION
BLOCK —1450

bw(D)

TO 1630
WINDOW FIXING
DETERMINATION

FFT —1460

Bw(WINDOWED,
NORMALIZED)

# FIG.6

Bw(WINDOWED,        1500 FILTER COEFFICIENT
NORMALIZED)              UPDATE BLOCK

X → MULTIPLIER —1540

BwX          1530        1510

SUBTRACTOR ← MULTIPLIER ← FFT ← y (D)

WwY

1550

FREQUENCY-
DOMAIN
LMS BLOCK

Ww

1560

FFT —1520

Ww(D) (WINDOWED,
SHIFTED)

Wu(UPDATED)

## FIG.7

Wu(UPDATED)

FROM 1470

1610 — IFFT

Wu(D)

1620 WINDOW BLOCK

1630 — SELECTOR ← POWER

WINDOW FIXING DETERMINATION

1640 — WINDOWING BLOCK

1650 — SHIFT TAP

Ww(D) (WINDOWED, SHIFTED)

1600
FILTER COEFFICIENT WINDOW BLOCK

## FIG.8

Wu(UPDATED)

TO 1430
WINDOW FIXING
DETERMINATION

IFFT —1610

1620 WINDOW BLOCK

Wu(D)

1630

SELECTOR ← POWER → 1660
WINDOW FIXING DETERMINATION BLOCK

WINDOW FIXING DETERMINATION

WINDOWING BLOCK —1640

SHIFT TAP —1650

Ww(D) (WINDOWED, SHIFTED)

1600
FILTER COEFFICIENT WINDOW BLOCK

## FIG.9

bu(D)

WINDOW
FUNCTION

bw(D)

## FIG.10

Wu(D)

WINDOW
FUNCTION

AFTER
WINDOWING

Ww(D)

*FIG.11*

PRBS GENERATOR (110)

ENCODER (120)

X

IFFT (130)

x (D)

CHANNEL (200)

1000 RECEIVER (100)

PRBS GENERATOR (1200)

y (D)

ENCODER (1250)

X

TARGET IMPULSE RESPONSE UPDATE BLOCK (1300)

Bu(UPDATED)

TARGET IMPULSE RESPONSE WINDOW BLOCK (1400)

Bw(WINDOWED, NORMALIZED)

FILTER COEFFICIENT UPDATE BLOCK (1500)

Wu(UPDATED)

FILTER COEFFICIENT WINDOW BLOCK (1600)

UPDATE NUMBER COUNTER (1700)

Ww(WINDOWED, SHIFTED)

## FIG.12

Bu(UPDATED)

1400 TARGET IMPULSE RESPONSE WINDOW BLOCK

FROM 1700 UPDATE NUMBER

IFFT ~1410

1420

bu(D)

1430

SELECTOR

WINDOW FIXING DETERMINATION

1470

WINDOW FIXING DETERMINATION BLOCK

WINDOWING BLOCK ~1440

NORMALIZATION BLOCK ~1450

bw(D)

FFT ~1460

Bw(WINDOWED, NORMALIZED)

## FIG.13

Bw(WINDOWED, NORMALIZED)

1500 TARGET IMPULSE RESPONSE WINDOW BLOCK

X

MULTIPLIER ~1540

BwX

1530

1510

SUBTRACTOR

MULTIPLIER

FFT

y (D)

WwY

E 1550

FREQUENCY-DOMAIN LMS BLOCK

Ww

FFT ~1520

1560

Wu(UPDATED)

Ww(D) (WINDOWED, NORMALIZED, SHIFTED)

# FIG.14

Wu(UPDATED)

FROM 1700
UPDATE NUMBER

IFFT ——1610

1620 WINDOW BLOCK

Wu(D)

1630

SELECTOR

POWER

1660

WINDOW FIXING
DETERMINATION BLOCK

WINDOW FIXING
DETERMINATION

WINDOWING
BLOCK ——1640

SHIFT TAP ——1650

Ww(D)  (WINDOWED, SHIFTED)

1600
FILTER COEFFICIENT WINDOW BLOCK

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | US 5 285 474 A (CHOW JACKY  ET AL) 8 February 1994 (1994-02-08) * abstract * * column 7, line 1 - column 10, line 10 * * claims 6,7,9 * | 1-8 | H04L25/03 H04L27/26 |
| A | US 5 521 908 A (YOUNCE RICHARD C  ET AL) 28 May 1996 (1996-05-28) * abstract * * column 1, line 65 - column 2, line 31 * * column 2, line 52 - line 55 * * column 3, line 22 - line 24 * * claims 1-7 * | 1-8 | |
| A | EP 0 734 133 A (PHILIPS ELECTRONIQUE LAB ;PHILIPS ELECTRONICS NV (NL)) 25 September 1996 (1996-09-25) * column 2, line 49 - column 3, line 54 * * column 7, line 56 - column 8, line 22 * | 3,4,7,8 | |

TECHNICAL FIELDS SEARCHED (Int.Cl.6)

H04L

The present search report has been drawn up for all claims

| Place of search | Date of completion of the search | Examiner |
|---|---|---|
| THE HAGUE | 25 August 1999 | Koukourlis, S |

EPO FORM 1503 03.82 (P04C01)

**ANNEX TO THE EUROPEAN SEARCH REPORT
ON EUROPEAN PATENT APPLICATION NO.**

EP 99 10 8629

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-1999

| Patent document cited in search report | | Publication date | Patent family member(s) | | Publication date |
|---|---|---|---|---|---|
| US 5285474 | A | 08-02-1994 | AU | 4411393 A | 04-01-1994 |
| | | | WO | 9326096 A | 23-12-1993 |
| US 5521908 | A | 28-05-1996 | NONE | | |
| EP 0734133 | A | 25-09-1996 | FR | 2732178 A | 27-09-1996 |
| | | | JP | 8340315 A | 24-12-1996 |
| | | | US | 5796814 A | 18-08-1998 |

For more details about this annex : see Official Journal of the European Patent Office, No. 12/82